# FASCICULE DE BREVET EUROPEEN

(11) **EP 3 304 727 B1**
(45) Date de publication et mention de la délivrance du brevet: **30.06.2021**
(21) Numéro de dépôt: 15730247.2
(22) Date de dépôt: 26.05.2015
(51) Int. Cl.: H02S 40/34, H02S 40/36

(54) **DISPOSITIF DE CONNEXION ÉLECTRIQUE D'INSTALLATION PHOTOVOLTAÏQUE**
ELEKTRISCHE VERBINDUNGSVORRICHTUNG FÜR EIN PHOTOVOLTAIKSYSTEM
ELECTRICAL CONNECTION DEVICE FOR A PHOTOVOLTAIC SYSTEM

(43) Date de publication de la demande: 11.04.2018
(73) Titulaire: Arcelormittal, 1160 Luxembourg (LU)
(72) Inventeur: VIGNAL, Renaud, F-74320 Sévrier (FR); GERON, Laurent, B-4632 Cerexhe-Heuseux (BE)
(74) Mandataire: Lavoix
(86) Numéro de dépôt international: PCT/IB2015/000755
(87) Numéro de publication internationale: WO 2016/189343

(56) Documents cités:
- EP-A2- 2 600 078
- WO-A2-2009/090347
- US-A1- 2009 114 263
- None

## Description

La présente invention concerne un boitier de connexion électrique pour panneau de parement extérieur de bâtiment porteur d'au moins un module photovoltaïque. Un tel panneau est destiné principalement à la réalisation de toitures photovoltaïques sans toutefois y être limité.

Il est connu de réaliser les couvertures de toit avec des panneaux nervurés, par exemple en acier galvanisé prélaqué, dont les bords se chevauchent pour assurer l'étanchéité de la toiture.

Il est par ailleurs connu, notamment de WO2009090347, de rapporter sur la couverture des bâtiments des modules photovoltaïques. Il peut s'agir notamment de modules sous forme de rubans souples collés sur la surface des creux d'onde du panneau nervuré. Dans le futur, il pourrait aussi s'agir de dispositifs photovoltaïques réalisés directement sur la surface des creux d'onde du panneau nervuré notamment par des procédés de dépôt sous vide ou à pression atmosphérique. Ces modules sont reliés entre eux par un réseau de câbles de préférence majoritairement situés en face envers de la couverture de sorte à éviter la dégradation prématurée des câbles et à préserver l'esthétique du bâtiment.

Une telle disposition présente cependant l'inconvénient de nécessiter d'avoir accès à la sous-toiture pour assurer le raccordement, en face arrière des panneaux nervurés, de deux modules successifs.

Il est connu de JP10102708 d'éviter l'utilisation des câbles en ayant recours, d'une part, à un connecteur électrique mâle situé au voisinage de l'extrémité inférieure du panneau et en face envers et, d'autre part, à un connecteur électrique femelle situé au voisinage de l'extrémité supérieure du panneau et en face supérieure. Lors de l'assemblage de deux panneaux de toiture adjacents longitudinalement, le connecteur électrique mâle du panneau supérieur est inséré dans le connecteur électrique femelle du panneau inférieur, ce qui connecte électriquement le module photovoltaïque du panneau supérieur au module photovoltaïque du panneau inférieur.

Une telle disposition ne permet cependant pas d'ajuster le schéma de câblage de l'installation photovoltaïque en cas d'accidents de toiture, tels que, par exemple, une souche de cheminée, une douille de ventilation, une chatière, une lucarne, une trappe d'accès. Le recours à des câbles électriques pour contourner l'accident de toiture n'est en effet pas compatible avec les connecteurs électriques mâle et femelle.

Il est également connu de US20090114263 un boitier de connexion pour module photovoltaïque comprenant un dispositif amovible permettant de déconnecter électriquement les cellules photovoltaïques lors de l'installation des modules. Un tel boitier ne permet cependant pas de faciliter le câblage des modules photovoltaïques entre eux.

La présente invention a pour but de pallier aux problèmes précités en proposant un boitier de connexion électrique facilitant l'assemblage des panneaux et le câblage des modules photovoltaïques.

A cet effet, l'invention a pour premier objet un boitier de connexion électrique pour panneau de parement extérieur de bâtiment porteur d'au moins un module photovoltaïque comprenant un pôle électrique à l'une de ses extrémités longitudinales et un pôle électrique de polarité inverse à l'autre extrémité, le boitier de connexion comprenant :
- un fond,
- une paroi latérale entourant le fond et s'étendant perpendiculairement à celui-ci, la paroi latérale comprenant, sur sa face externe, un rebord périphérique destiné au maintien du boitier de connexion en place dans une ouverture pratiquée dans le panneau de parement extérieur,
- une trappe d'accès, située dans la partie du boitier de connexion se trouvant en-dessous du rebord périphérique, destinée à l'insertion, dans le boitier de connexion, d'un coupe-circuit,
- une sortie de câble, située dans la partie du boitier de connexion se trouvant au-dessus du rebord périphérique, destinée à relier le boitier de connexion électrique à un pôle électrique du module photovoltaïque porté par le panneau,
- une cavité interne délimitée par le fond et la paroi, comprenant :
   ∘ une borne électrique d'axe perpendiculaire au fond, destinée au branchement d'une fiche électrique située en face envers d'un panneau de parement extérieur adjacent,
   ∘ un interrupteur électrique reliant la borne électrique à la sortie de câble et situé en regard de la trappe d'accès.

Le boitier selon l'invention peut également comprendre les caractéristiques optionnelles suivantes, prises isolément ou en combinaison :
- le rebord périphérique est situé dans le tiers supérieur de la paroi latérale,
- le rebord périphérique est continu sur la périphérie de la paroi latérale,
- la trappe d'accès est délimitée par une zone de plus fine épaisseur que la paroi latérale ou le fond,
- la sortie de câble est adjacente au rebord périphérique,
- la sortie de câble se présente sous la forme d'une borne électrique apte au branchement d'une fiche électrique,
- l'interrupteur électrique est un interrupteur à lames souples à actionnement mécanique comprenant deux lames de contact au contact l'une de l'autre par défaut et qui peuvent être écartés l'une de l'autre par une action mécanique.

Un second objet de l'invention est constitué par un panneau de parement extérieur de bâtiment comprenant :
- un bord transversal supérieur comprenant une zone de recouvrement supérieure destinée à être recouverte par un panneau adjacent,
- un bord transversal inférieur comprenant une zone de recouvrement inférieure destinée à recouvrir un panneau adjacent,
- une partie centrale, reliant les bords transversaux, recouverte d'au moins un module photovoltaïque comprenant un pôle électrique à l'une de ses extrémités longitudinales et un pôle électrique de polarité inverse à l'autre extrémité,
- un percement situé dans la zone de recouvrement inférieure et traversé par un câble électrique reliant l'un des deux pôles électriques du module photovoltaïque à une fiche électrique située en face envers du panneau dans la zone de recouvrement inférieure,
- une ouverture, située dans la zone de recouvrement supérieure, dans laquelle est inséré un boitier de connexion électrique relié à l'autre pôle électrique du module photovoltaïque par l'intermédiaire d'un câble électrique, le boitier de connexion comprenant :
   ∘ un fond,
   ∘ une paroi latérale entourant le fond et s'étendant perpendiculairement à celui-ci, la paroi latérale comprenant, sur sa face externe, un rebord périphérique pour le maintien du boitier de connexion en place dans l'ouverture,
   ∘ une trappe d'accès, située dans la partie du boitier de connexion se trouvant en-dessous du rebord périphérique, destinée à l'insertion, dans le boitier de connexion, d'un coupe-circuit,
   ∘ une sortie de câble, située dans la partie du boitier de connexion se trouvant au-dessus du rebord périphérique, pour relier le boitier de connexion électrique à l'autre pôle électrique du module photovoltaïque,
   ∘ une cavité interne délimitée par le fond et la paroi, comprenant :
      ▪ une borne électrique d'axe perpendiculaire au fond, destinée au branchement d'une fiche électrique située en face envers d'un panneau de parement extérieur adjacent,
      ▪ un interrupteur électrique reliant la borne électrique à la sortie de câble et situé en regard de la trappe d'accès.

Le panneau selon l'invention peut également comprendre la caractéristique optionnelle selon laquelle il comprend un renfoncement entourant l'ouverture.

Un troisième objet de l'invention est constitué par un ensemble de connexion électrique comprenant un boitier de connexion électrique selon l'invention et un coupe-circuit comprenant :
- un corps central permettant la prise en main du coupe-circuit,
- un couteau, prolongeant le corps central d'un coté et portant sur ses faces, respectivement inférieure et supérieure, deux contacteurs électriques,
- deux prises électriques prolongeant le corps central de l'autre coté, chaque prise électrique étant reliée à un contacteur électrique.

D'autres caractéristiques et avantages de l'invention apparaitront à la lecture de la description qui va suivre.

Afin d'illustrer l'invention, des essais ont été réalisés et vont être décrits à titre d'exemples non limitatifs, notamment en référence aux figures qui représentent :
L'invention sera mieux comprise à la lecture de la description qui suit, donnée à titre explicatif mais non limitatif, en référence aux figures annexées qui représentent :
- La figure 1 est une vue en perspective d'un panneau de parement extérieur de bâtiment porteur d'au moins un module photovoltaïque,
- La figure 2 est une vue en perspective de la partie supérieure du panneau de la figure 1,
- La figure 3 est une vue en perspective de la partie inférieure du panneau de la figure 1,
- La figure 4 est une vue en perspective d'un panneau de parement extérieur de bâtiment porteur d'au moins un module photovoltaïque,
- La figure 5 est une vue en perspective de la face envers de la partie inférieure du panneau de la figure 4,
- La figure 6 est une vue en perspective d'un boitier de connexion électrique selon un premier mode de réalisation,
- La figure 7 est une vue en coupe schématique d'une toiture comprenant deux panneaux de parement extérieur de bâtiment porteurs d'au moins un module photovoltaïque,
- La figure 8 est une vue écorchée d'un boitier de connexion électrique,
- La figure 9 est une vue en perspective d'un coupe-circuit,
- La figure 10 est une vue écorchée d'un boitier de connexion électrique en combinaison avec un coupe-circuit,
- La figure 11 est une vue en perspective d'un boitier de connexion électrique selon un second mode de réalisation.

Les mêmes numéros de référence représentent les mêmes éléments dans chacune des figures.

Dans l'ensemble du texte, on entendra par panneau un élément de forme plate, c'est-à-dire de faible épaisseur comparée à ses autres dimensions. Le panneau peut se présenter sous la forme d'une plaque ou d'une feuille constituée d'un matériau unique ou d'un assemblage composite. Dans ce dernier cas, le panneau est une superposition de plusieurs couches du même matériau ou de matériaux différents. Le matériau en question peut être, entre autre, un matériau métallique, un polymère ou encore une céramique. On pourra citer à titre d'exemple non limitatif de matériaux métalliques l'acier, l'aluminium, le cuivre, le zinc. De préférence le panneau est une tôle métallique. De préférence, il s'agit d'acier préalablement galvanisé et prélaqué afin de le protéger de la corrosion. Le panneau peut optionnellement être moussé en face inférieure et ainsi constituer le parement extérieur d'un panneau sandwich.

Dans le cadre de l'invention, le panneau aura été de préférence préalablement mis en forme au moyen de tout procédé connu de mise en forme parmi lesquels on citera à titre d'exemple non limitatif le pliage, le profilage, l'emboutissage, le moulage.

Pour former un parement extérieur de bâtiment, tel qu'une toiture ou une façade, les panneaux sont assemblés par recouvrement marginal de leurs bords longitudinaux et de leurs bords transversaux et fixés à la structure porteuse du bâtiment par l'intermédiaire de moyens de fixation tels que des vis, des clous ou encore des rivets.

Dans la suite de la description, pour faciliter la compréhension de l'invention, il sera fait seulement référence à une toiture, bien que l'invention puisse être utilisée pour tout parement extérieur de bâtiment.

Dans l'ensemble du texte, on entendra par module photovoltaïque, un ensemble de cellules photovoltaïques reliées entre elles, de préférence en série, et isolées de l'extérieur par une barrière protectrice. Il peut s'agir, à titre d'exemple non limitatif, d'un module sous forme de ruban souple collé sur la partie centrale du panneau ou d'un module réalisé directement sur la partie centrale du panneau par dépôts successifs de couches de natures appropriées par des procédés de dépôt sous vide ou à pression atmosphérique.

Au sein de chaque module photovoltaïque, la disposition et l'organisation des cellules photovoltaïques n'est pas limitative. A titre d'exemple non limitatif, les cellules peuvent être disposées les unes sous les autres en une unique rangée ou peuvent être disposées en plusieurs rangées, les rangées étant reliées les unes aux autres de sorte à former une sorte de ruban plié. De préférence, et afin de faciliter la réalisation, directement sur le panneau, de modules photovoltaïques par des procédés de dépôt sous vide ou à pression atmosphérique, les cellules sont disposées en une unique rangée.

Dans le cadre de l'invention, le module photovoltaïque comprend un pôle électrique à l'une de ses extrémités longitudinales et un pôle électrique de polarité inverse à l'autre extrémité.

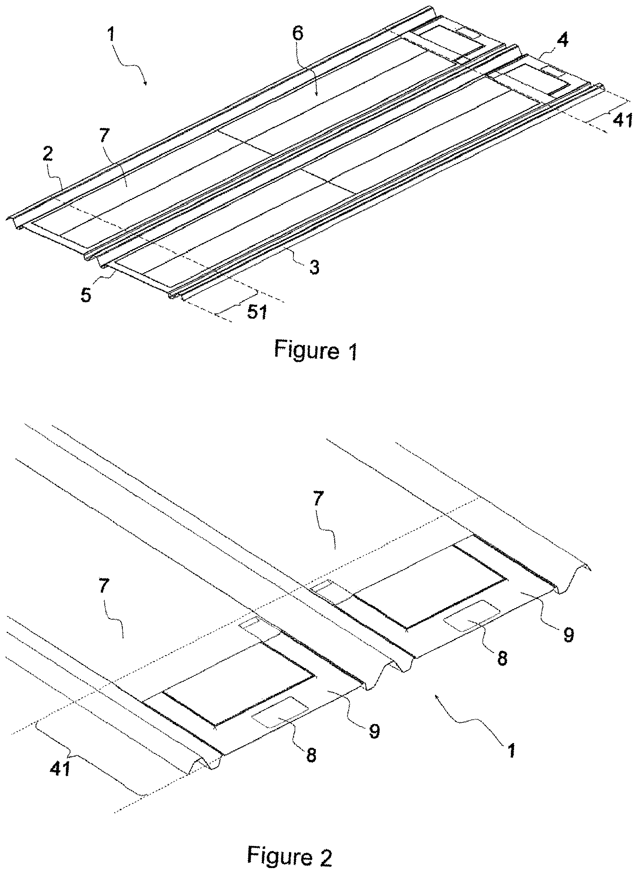

En référence à la figure 1, le panneau 1 de parement extérieur de bâtiment est principalement constitué d'un premier bord longitudinal 2, d'un second bord longitudinal 3, d'un bord transversal supérieur 4, d'un bord transversal inférieur 5, les quatre bords étant reliés par une partie centrale 6 recouverte d'au moins un module photovoltaïque 7.

Le bord transversal supérieur 4 comprend une zone de recouvrement supérieure 41 destinée à être recouverte par un panneau adjacent lors de l'assemblage de la toiture. Cette zone de recouvrement supérieure a généralement une largeur comprise entre 150 et 500mm en fonction, entre autre, de la pente du toit.

Le bord transversal inférieur 5 comprend une zone de recouvrement inférieure 51 destinée à recouvrir un panneau adjacent lors de l'assemblage de la toiture. Cette zone de recouvrement inférieure a généralement une largeur comprise entre 150 et 500mm en fonction, entre autre, de la pente du toit.

En référence à la figure 2, la zone de recouvrement supérieure 41 du panneau 1 comprend une ouverture 8 destinée à l'encastrement d'un boitier de connexion électrique. Les dimensions de l'ouverture sont adaptées au boitier de connexion électrique prévu à cet effet. En particulier, les dimensions sont ajustées en tenant compte des dilatations thermiques et des charges pouvant s'exercer sur le panneau lors de son utilisation.

L'ouverture 8 peut être obtenue par toute technique de découpe connue de l'homme du métier, parmi lesquelles, on pourra citer, à titre d'exemples non limitatifs, le poinçonnage, le fraisage, la découpe mécanique, la découpe laser, la découpe à l'eau, l'oxycoupage.

De préférence, la zone de recouvrement supérieure 41 du panneau 1 comprend également un renfoncement 9 entourant l'ouverture 8. Ce renfoncement permet d'abaisser le boitier de connexion comparativement au pourtour du renfoncement et d'intégrer les câbles électriques reliant le boitier de connexion au module photovoltaïque 7. En ajustant les dimensions respectives du renfoncement, du boitier de connexion et des câbles électriques, il est ainsi possible de recouvrir de façon jointive la zone de recouvrement supérieure 41 par la zone de recouvrement inférieure 51 d'un panneau adjacent. Ceci favorise l'étanchéité de l'assemblage de deux panneaux adjacents.

Le renfoncement 9 peut être obtenu par emboutissage du panneau ou par toute autre technique de mise en forme connue de l'homme du métier et adaptée à la situation.

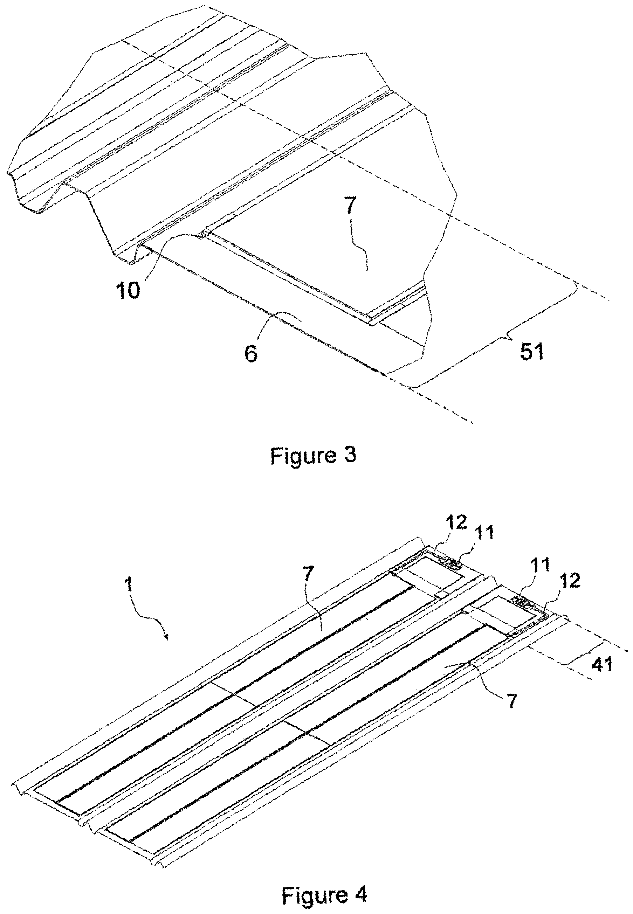

En référence à la figure 3, la zone de recouvrement inférieure 51 comprend un percement 10, c'est-à-dire une ouverture pratiquée dans l'épaisseur du panneau. Le percement 10 permet de faire passer en face arrière du panneau un câble électrique relié au module photovoltaïque 7.

Le percement 10 peut être obtenu par toute technique de découpe connue de l'homme du métier, parmi lesquelles, on pourra citer, à titre d'exemples non limitatifs, le poinçonnage, le fraisage, la découpe mécanique, la découpe laser, la découpe à l'eau, l'oxycoupage.

En référence à la figure 4, le panneau 1 comprend également un boitier de connexion 11 inséré dans l'ouverture 8 pratiquée dans le panneau 1 dans la zone de recouvrement supérieure 41. Le boitier de connexion 11 est relié au module photovoltaïque 7, et en particulier à son pôle électrique situé à son extrémité supérieure, par l'intermédiaire d'un câble électrique 12.

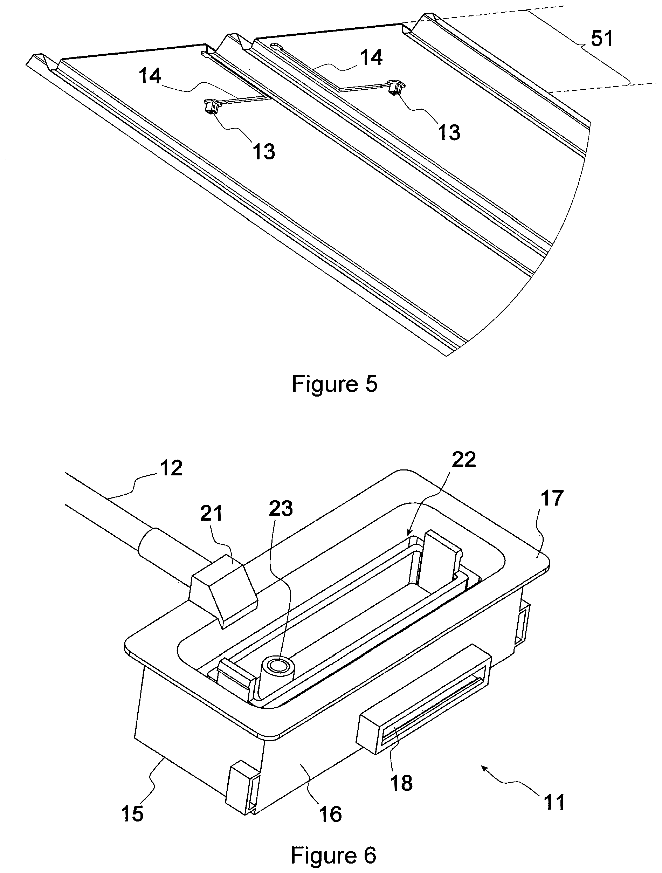

En référence à la figure 5, le panneau 1 comprend également une fiche électrique 13 située en face envers du panneau dans la zone de recouvrement inférieure 51. La fiche électrique 13 est reliée au module photovoltaïque 7 (non visible sur la figure 5), et en particulier à son pôle électrique situé à son extrémité inférieure, par l'intermédiaire d'un câble électrique 14. Le câble électrique 14 traverse le panneau 1 au niveau du percement 10 (non visible sur la figure).

La fiche électrique 13 est destinée à être branchée sur le boitier de connexion d'un panneau 1 adjacent, lorsque la zone de recouvrement inférieure 51 du panneau porteur de la fiche électrique recouvre la zone de recouvrement supérieure 41 du panneau adjacent. De la sorte, les modules photovoltaïques portés par ces deux panneaux sont reliés électriquement.

En référence à la figure 6, on décrit le boitier de connexion 11 selon un premier mode de réalisation.

Le boitier de connexion comprend, tout d'abord, un fond 15 bordé par une paroi latérale 16 qui s'élève perpendiculairement au fond.

De préférence, le fond 15 ne comprend aucune ouverture afin de faciliter la bonne étanchéité à l'eau du boitier de connexion.

De préférence, le fond 15 est plat afin de minimiser l'encombrement du boitier de connexion et permettre sa bonne insertion au niveau de la zone de recouvrement entre deux panneaux de parement extérieur adjacents.

Selon la variante illustrée, la paroi latérale 16 est de section rectangulaire et est donc formée de quatre cotés latéraux de paroi. Dans le cadre de l'invention, d'autres sections de paroi sont cependant envisageables.

Le fond et la paroi latérale sont, de préférence, réalisés en matériau isolant, par exemple par moulage d'une matière synthétique, en particulier en plastique.

La paroi latérale 16 comprend, sur sa face externe, un rebord périphérique 17.

Le rebord périphérique 17 permet d'appuyer le boitier de connexion en butée sur le panneau de parement extérieur lorsque le boitier, et en particulier la paroi latérale, est inséré dans l'ouverture 8 pratiquée dans le panneau de parement extérieur.

De préférence, le rebord périphérique 17 est constitué d'un bourrelet de la même matière que la paroi latérale du boitier de connexion. Le rebord peut ainsi être fabriqué en même temps que la paroi latérale, par exemple par moulage.

De préférence, le rebord périphérique 17 est situé dans le tiers supérieur de la paroi latérale, et plus préférentiellement au niveau du bord supérieur de la paroi latérale, de sorte que le boitier de connexion dépasse le moins possible en face supérieur du panneau de parement extérieur. Une telle configuration permet d'assurer un bon recouvrement de deux panneaux de parement extérieur adjacents longitudinalement.

De préférence, le rebord périphérique 17 est continu sur la périphérie de la paroi latérale. Ceci permet de faciliter la réalisation de l'étanchéité à l'eau entre le boitier de connexion et le panneau de parement extérieur. Il est cependant possible de prévoir un rebord périphérique discontinu si une bonne étanchéité n'est pas nécessaire à ce niveau.

Pour ces mêmes raisons d'étanchéité à l'eau, il est possible de prévoir, en face inférieure du rebord périphérique, un joint d'étanchéité. Ce joint sera écrasé entre le boitier et le panneau lors de la mise en place du boitier sur le panneau. Ce joint d'étanchéité peut être constitué d'une colle assurant le collage du boitier de connexion sur le panneau de parement extérieur.

Le boitier de connexion 11 comprend par ailleurs une trappe d'accès 18, située dans la paroi latérale du boitier de connexion. La trappe d'accès se définit par une portion de paroi latérale amovible du reste de la paroi latérale.

Selon une variante de l'invention, la trappe d'accès 18 est délimitée par une zone de plus fine épaisseur que la paroi latérale. Il est alors facile pour un opérateur de couper au cutter la zone de plus fine épaisseur et donner ainsi accès à l'intérieur du boitier de connexion.

Selon une autre variante de l'invention, la trappe d'accès 18 est un capot maintenu en place par des vis. Il est alors facile pour un opérateur de dévisser les vis, retirer le capot et donner ainsi accès à l'intérieur du boitier de connexion.

La trappe d'accès 18 est située sur la paroi latérale du boitier de connexion, de préférence sur le coté latéral de paroi destiné à être orienté vers le bord transversal supérieur 4 du panneau. Elle est ainsi facile d'accès lorsque le boitier de connexion est inséré dans le panneau 1, lui-même mis en place sur la toiture. En effet, l'opérateur n'a alors pas besoin d'avoir accès à la sous-toiture pour accéder à la trappe d'accès. L'accès au bord transversal supérieur 4 du panneau 1 lui suffit pour accéder à la trappe d'accès.

En fonction de la profondeur du renfoncement 9 et/ou de la position du rebord périphérique 17, la trappe d'accès pourra être située au-dessus ou en-dessous du rebord périphérique.

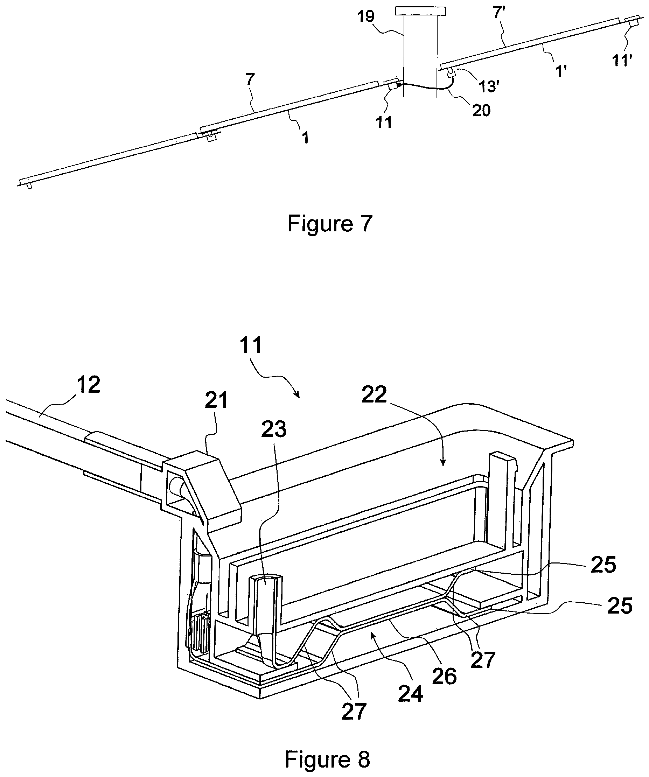

Cette trappe d'accès permet d'ajuster le schéma de câblage de l'installation photovoltaïque en fonction des accidents de toiture. En effet, comme illustré à la figure 7, en cas d'accident de toiture, tel qu'une souche de cheminée 19, le module photovoltaïque 7 porté par le panneau 1 adjacent à l'accident de toiture ne peut pas être relié électriquement au panneau 1' situé au delà de l'accident de toiture par simple emboitement de la fiche électrique 13' du panneau 1' dans le boitier de connexion 11 du panneau 1. Grâce à la trappe d'accès du boitier de connexion 11, il est alors possible de brancher électriquement une extrémité d'un câble électrique 20 sur le boitier de connexion du panneau adjacent à l'accident de toiture. L'autre extrémité du câble électrique 20 est branchée sur la fiche électrique 13' du panneau 1' situé au delà de l'accident de toiture.

Les détails du branchement électrique du câble électrique 20 sur le boitier de connexion 8 seront décrits ultérieurement.

De part la position de la trappe d'accès 18, le câble électrique 20 utilisé se trouve en sous-face des panneaux 1. Ceci permet d'éviter la dégradation prématurée du câble et de préserver l'esthétique du bâtiment.

En référence à la figure 6, le boitier de connexion comprend, par ailleurs, une sortie de câble 21 située dans la partie du boitier de connexion se trouvant au-dessus du rebord périphérique 17, autrement dit dans la partie du boitier accessible depuis la face supérieure du panneau 1 une fois que le boitier de connexion 11 est inséré dans l'ouverture 8 du panneau.

Cette sortie de câble 21 permet de relier le pôle électrique supérieur du module photovoltaïque au boitier de connexion par l'intermédiaire du câble électrique 12.

Le fait que la sortie de câble 21 soit située dans la partie du boitier de connexion se trouvant au-dessus du rebord périphérique 17 permet d'éviter que le panneau 1 ne soit percé pour permettre le passage du câble électrique 12.

Selon une variante de l'invention, la sortie de câble 21 est adjacente au rebord périphérique. Cette disposition permet au câble électrique 12 d'affleurer le panneau 1. Le câble peut ainsi être collé sur le panneau et son faible encombrement facilite le recouvrement du panneau par un panneau adjacent.

Selon une variante de l'invention, la sortie de câble 21 se présente sous la forme d'une borne électrique apte au branchement d'une fiche électrique disposée à l'extrémité du câble électrique 12 destiné à relier le pôle électrique supérieur du module photovoltaïque 7 au boitier de connexion 11. La borne électrique peut être indifféremment une borne mâle ou une borne femelle. Le genre de la fiche électrique du câble électrique 12 sera simplement ajusté en conséquence.

Alternativement, la sortie de câble 21 permet le passage d'un câble électrique directement connecté à l'intérieur du boitier de connexion, comme illustré à la figure 8.

En référence à la figure 6, le fond 15 et la paroi latérale 16 définissent une cavité intérieure 22.

La cavité intérieure 22 comprend tout d'abord une borne électrique 23 d'axe perpendiculaire au fond.

La borne électrique 23 permet de relier électriquement le boitier de connexion d'un premier panneau 1 à la fiche électrique 13 d'un deuxième panneau 1 lors de l'assemblage de deux panneaux adjacents. En particulier, lorsque la zone de recouvrement inférieure 51 du panneau supérieur est placée sur la zone de recouvrement supérieure 41 du panneau inférieur, par un mouvement de translation perpendiculaire au plan des panneaux, la borne électrique 23 du boitier de connexion du panneau inférieur et la fiche électrique 13 du panneau supérieur s'emboitent.

La borne électrique 23 peut être indifféremment une borne mâle ou une borne femelle. Le genre de la fiche électrique 13 sera simplement ajusté en conséquence.

L'homme du métier saura ajuster la géométrie et les dimensions respectives de la borne électrique 23 et de la fiche électrique 13 de sorte à assurer une bonne connexion électrique et une bonne étanchéité à l'eau après emboitement de la borne électrique 23 et de la fiche électrique 13.

En référence à la figure 8, la cavité intérieure 22 du boitier de connexion 11 comprend, par ailleurs, un interrupteur électrique 24 reliant la borne électrique 23 à la sortie de câble 21.

L'interrupteur électrique 24 permet d'ouvrir le circuit électrique entre la borne électrique 23 et la sortie de câble 21. En cas d'ouverture du circuit électrique, la connexion électrique entre deux modules photovoltaïques 7 portés par deux panneaux 1 adjacents n'est plus possible. En revanche, il est alors possible de relier électriquement des modules photovoltaïques portés par des panneaux distants par l'intermédiaire du câble électrique 20, comme cela a été illustré à la figure 7.

Selon la variante illustrée, l'interrupteur électrique 24 se présente sous la forme d'un interrupteur à lames souples à actionnement mécanique. Il comprend deux lames de contact 25 qui sont au contact l'une de l'autre par défaut et qui peuvent être écartées l'une de l'autre par une action mécanique, par exemple par insertion d'un coupe-circuit. La première lame de contact est reliée électriquement à la borne électrique 23. La deuxième lame de contact est reliée électriquement à la sortie de câble 21.

Chaque lame de contact comprend une partie centrale 26 apte au contact électrique avec la partie centrale de l'autre lame de contact. De préférence, la partie centrale est plane de sorte à favoriser un bon contact électrique.

Chaque partie centrale 26 est prolongée de part et d'autre par des pattes souples 27 dont la souplesse permet le déplacement de la partie centrale 26 lors de l'insertion du coupe-circuit.

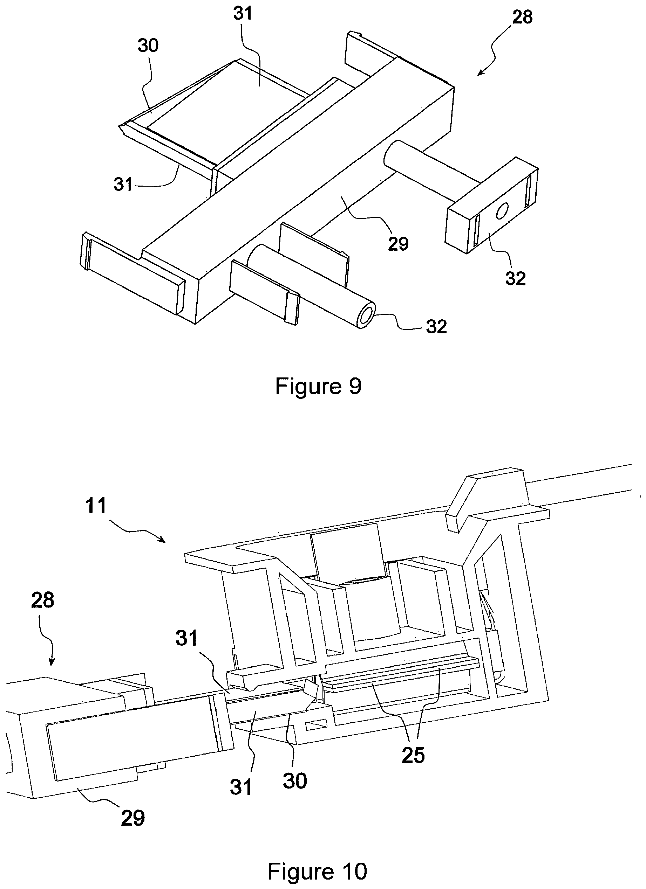

L'interrupteur électrique 24 est situé en regard de la trappe d'accès 18. Lors de l'ouverture de cette dernière, il est alors possible d'insérer dans le boitier de connexion un coupe-circuit 28, comme illustré aux figures 9 et 10.

Comme illustré sur la figure 9, le coupe-circuit 28 comprend :
- un corps central 29 permettant la prise en main du coupe-circuit,
- un couteau 30, prolongeant le corps central d'un coté et portant sur ses faces, respectivement inférieure et supérieure, deux contacteurs électriques 31,
- deux prises électriques 32 prolongeant le corps central de l'autre coté. Chacun des contacteurs électriques 31 est relié à une prise électrique 32.

Comme illustré sur la figure 10, en cas d'insertion du coupe-circuit 27 dans le boitier de connexion, au niveau de la trappe d'accès, le couteau du coupe-circuit écarte les deux lames de contact 25 de l'interrupteur électrique du boitier de connexion. Le contacteur électrique 31 supérieur se retrouve alors en contact électrique avec la lame de contact 25 supérieure. De la sorte, la borne électrique 23 se trouve reliée électriquement à une des deux prises électriques 32. Le contacteur électrique 31 inférieur se retrouve quant à lui en contact électrique avec la lame de contact 25 inférieure. De la sorte, la sortie de câble 21 se trouve reliée électriquement à la seconde prise électrique 32.

Grâce à ce coupe-circuit associé à l'interrupteur électrique, un câble électrique 20, tel qu'illustré à la figure 7, peut être branché sur la seconde prise électrique 32 de sorte à relier électriquement la suite de l'installation au module photovoltaïque 7, disposé sur le panneau 1 et connecté à la sortie de câble 21.

De préférence, lorsque l'interrupteur électrique 24 se présente sous la forme d'un interrupteur à lames souples à actionnement mécanique, chacun des contacteurs 31 a une forme similaire à la partie centrale 26 des lames de contact de sorte à permettre un bon contact électrique entre une lame de contact 25 et un contacteur 31 lors de l'insertion du coupe-circuit 28 dans le boitier de connexion 11.

A titre d'alternative à l'insertion d'un coupe-circuit, la trappe d'accès 18 et l'interrupteur électrique 24 permettent de connecter sur le boitier de connexion d'autres dispositifs électroniques qui vont permettent, par exemple, de fonctionnaliser le boitier de connexion. Il peut s'agir, à titre d'exemples non limitatifs, d'un contrôle électronique, d'un micro-convertisseur,...

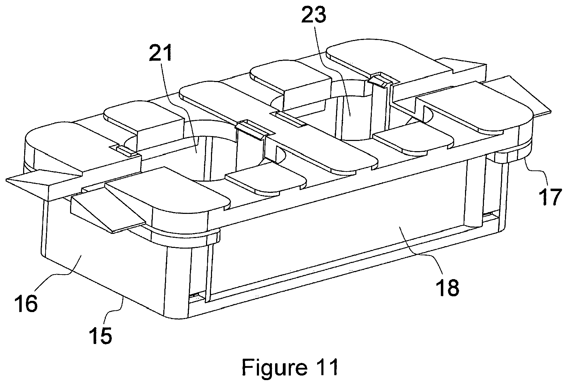

En référence à la figure 11, on décrit le boitier de connexion 11 selon un second mode de réalisation.

Le boitier de connexion 11 selon ce second mode de réalisation comprend l'ensemble des caractéristiques du boitier de connexion selon le premier mode de réalisation à l'exception des caractéristiques décrites ci-dessous.

La sortie de câble 21 se présente sous la forme d'une borne électrique, d'axe perpendiculaire au fond, située dans la cavité intérieure 22. Une telle disposition permet de facilement brancher, depuis la face supérieure du panneau 1, une fiche électrique disposée à l'extrémité du câble électrique 12 (non représenté sur la figure) destiné à relier le pôle électrique supérieur du module photovoltaïque 7 au boitier de connexion 11.

La cavité intérieure 22 est partiellement fermée par un couvercle 33 fermant la cavité à l'exception des extrémités supérieures de la borne électrique 23 et de la sortie de câble 21.

## Revendications

1. Boitier de connexion électrique (11) pour panneau de parement extérieur de bâtiment porteur d'au moins un module photovoltaïque comprenant un pôle électrique à l'une de ses extrémités longitudinales et un pôle électrique de polarité inverse à l'autre extrémité, le boitier de connexion comprenant :
- un fond (15),
- une paroi latérale (16) entourant le fond et s'étendant perpendiculairement à celui-ci, la paroi latérale comprenant, sur sa face externe, un rebord périphérique (17) destiné au maintien du boitier de connexion en place dans une ouverture pratiquée dans le panneau de parement extérieur,
- une trappe d'accès (18), située sur la paroi latérale du boitier de connexion, destinée à l'insertion, dans le boitier de connexion, d'un coupe-circuit (28),
- une sortie de câble (21), située dans la partie du boitier de connexion se trouvant au-dessus du rebord périphérique, destinée à relier le boitier de connexion électrique à un pôle électrique du module photovoltaïque porté par le panneau,
- une cavité interne (22) délimitée par le fond et la paroi, comprenant :
∘ une borne électrique (23) d'axe perpendiculaire au fond, destinée au branchement d'une fiche électrique (13) située en face envers d'un panneau de parement extérieur adjacent,
∘ un interrupteur électrique (24) reliant la borne électrique à la sortie de câble et situé en regard de la trappe d'accès.

2. Boitier de connexion électrique selon la revendication 1 pour lequel le rebord périphérique est situé dans le tiers supérieur de la paroi latérale (16).

3. Boitier de connexion électrique selon l'une des revendications 1 ou 2 pour lequel le rebord périphérique est continu sur la périphérie de la paroi latérale (16).

4. Boitier de connexion électrique selon l'une des revendications 1 à 3 pour lequel la trappe d'accès (18) est délimitée par une zone de plus fine épaisseur que la paroi latérale (16) ou le fond (15).

5. Boitier de connexion électrique selon l'une des revendications 1 à 4 pour lequel la sortie de câble (21) est adjacente au rebord périphérique (17).

6. Boitier de connexion électrique selon l'une des revendications 1 à 5 pour lequel la sortie de câble (21) se présente sous la forme d'une borne électrique apte au branchement d'une fiche électrique.

7. Boitier de connexion électrique selon l'une des revendications 1 à 6 pour lequel l'interrupteur électrique (24) est un interrupteur à lames souples à actionnement mécanique comprenant deux lames de contact (25) au contact l'une de l'autre par défaut et qui peuvent être écartés l'une de l'autre par une action mécanique.

8. Panneau de parement extérieur de bâtiment comprenant :
- un bord transversal supérieur (4) comprenant une zone de recouvrement supérieure (41) destinée à être recouverte par un panneau (1) adjacent,
- un bord transversal inférieur (5) comprenant une zone de recouvrement inférieure (51) destinée à recouvrir un panneau (1) adjacent,
- une partie centrale (6), reliant les bords transversaux, recouverte d'au moins un module photovoltaïque (7) comprenant un pôle électrique à l'une de ses extrémités longitudinales et un pôle électrique de polarité inverse à l'autre extrémité,
- un percement (10) situé dans la zone de recouvrement inférieure (51) et traversé par un câble électrique (14) reliant l'un des deux pôles électriques du module photovoltaïque à une fiche électrique (13) située en face envers du panneau dans la zone de recouvrement inférieure (51),
une ouverture (8), située dans la zone de recouvrement supérieure (41), dans laquelle est inséré un boitier de connexion électrique (11), selon la revendication 1, relié à l'autre pôle électrique du module photovoltaïque par l'intermédiaire d'un câble électrique (12).

9. Panneau de parement extérieur de bâtiment selon la revendication 8 comprenant en outre un renfoncement (9) entourant l'ouverture (8).

10. Ensemble de connexion électrique comprenant un boitier de connexion électrique selon l'une quelconque des revendications 1 à 7 et un coupe-circuit (28) comprenant :
- un corps central (29) permettant la prise en main du coupe-circuit,
- un couteau (30), prolongeant le corps central d'un coté et portant sur ses faces, respectivement inférieure et supérieure, deux contacteurs électriques (31),
- deux prises électriques (32) prolongeant le corps central de l'autre coté, chaque prise électrique étant reliée à un contacteur électrique.

## Patentansprüche

1. Elektrischer Anschlusskasten (11) für eine Platte einer Außenverkleidung eines Gebäudes, die mindestens ein Solarmodul trägt und einen elektrischen Pol an einem ihrer Längsenden und einen elektrischen Pol mit entgegengesetzter Polarität am anderen Ende umfasst, wobei der Anschlusskasten umfasst:
- einen Boden (15),
- eine Seitenwand (16), die den Boden umgibt und sich senkrecht dazu erstreckt, wobei die Seitenwand an ihrer Außenseite einen Umfangsflansch (17) aufweist, der zum Halten des Anschlusskastens in Stellung in einer Öffnung, die in der Platte der Außenverkleidung eingearbeitet ist, vorgesehen ist,
- einen Zugang (18), der sich an der Seitenwand des Anschlusskastens befindet und zum Einfügen eines Schaltkreisunterbrechers (28) in den Anschlusskasten vorgesehen ist,
- einen Kabelauslass (21), der sich in dem Teil des Anschlusskastens oberhalb des Umfangsflansches befindet und vorgesehen ist, den elektrischen Anschlusskasten mit einem elektrischen Pol des von der Platte getragenen Solarmoduls zu verbinden,
- einen inneren Hohlraum (22), der durch den Boden und die Wand begrenzt ist, umfassend:
∘ einen elektrischen Anschluss (23), der eine Achse senkrecht zum Boden aufweist und zur Verbindung mit einem elektrischen Stecker (13) vorgesehen ist, der auf der Rückseite einer benachbarten Platten der Außenverkleidung liegt,
∘ einen elektrischen Schalter (24), der den elektrischen Anschluss mit dem Kabelauslass verbindet und gegenüber dem Zugang liegt.

2. Elektrischer Anschlusskasten nach Anspruch 1, bei dem der Umfangsflansch im oberen Drittel der Seitenwand (16) angeordnet ist.

3. Elektrischer Anschlusskasten nach einem der Ansprüche 1 oder 2, bei dem der Umfangsflansch über den Umfang der Seitenwand (16) durchgehend ist.

4. Elektrischer Anschlusskasten nach einem der Ansprüche 1 bis 3, bei dem der Zugang (18) durch eine Zone mit geringerer Dicke als die Seitenwand (16) oder der Boden (15) begrenzt ist.

5. Elektrischer Anschlusskasten nach einem der Ansprüche 1 bis 4, bei dem der Kabelauslass (21) an den Umfangsflansch (17) angrenzt.

6. Elektrischer Anschlusskasten nach einem der Ansprüche 1 bis 5, bei dem der Kabelauslass (21) in Form eines elektrischen Anschlusses ausgebildet ist, der für die Verbindung mit einem elektrischen Stecker geeignet ist.

7. Elektrischer Anschlusskasten nach einem der Ansprüche 1 bis 6, bei dem der elektrische Schalter (24) ein mechanisch betätigter Zungenschalter ist, der zwei voreingestellte, miteinander in Kontakt stehende Kontaktzungen (25) umfasst, die durch eine mechanische Einwirkung voneinander wegbewegt werden können.

8. Platte einer Außenverkleidung eines Gebäudes, umfassend:
- einen oberen Querrand (4), der einen oberen Überdeckungsbereich (41) aufweist, der dazu bestimmt ist, von einer benachbarten Platte (1) abgedeckt zu werden,
- einen unteren Querrand (5), der einen unteren Überdeckungsbereich (51) aufweist, der dazu bestimmt ist, eine benachbarte Platte (1) abzudecken,
- einen mittleren Teil (6), der die Querränder verbindet und von mindestens einem Solarmodul (7) bedeckt ist, das einen elektrischen Pol an einem seiner Längsenden und einen elektrischen Pol mit entgegengesetzter Polarität am anderen Ende aufweist,
- einen Durchbruch (10), der im unteren Überdeckungsbereich (51) liegt und von einem elektrischen Kabel (14) durchgriffen wird, das einen der beiden elektrischen Pole des Solarmoduls mit einem elektrischen Stecker (13) verbindet, der sich auf der Rückseite der Platte im unteren Überdeckungsbereich (51) befindet,
- eine Öffnung (8), die im oberen Überdeckungsbereich (41) liegt und in die ein elektrischer Anschlusskasten (11) nach Anspruch 1 eingesetzt ist, der über ein elektrisches Kabel (12) mit dem anderen elektrischen Pol des Solarmoduls verbunden ist.

9. Platte einer Außenverkleidung eines Gebäudes nach Anspruch 8, die außerdem eine die Öffnung (8) umgebende Vertiefung (9) aufweist.

10. Elektrische Anschlussbaugruppe mit einem elektrischen Anschlusskasten nach einem der Ansprüche 1 bis 7 und einem Schaltkreisunterbrecher (28), umfassend:
- einen mittleren Körper (29), der das Ergreifen des Schaltkreisunterbrechers ermöglicht,
- ein Messer (30), das den mittleren Körper auf einer Seite verlängert und jeweils auf seiner unteren und oberen Fläche zwei elektrische Kontaktelemente (31) trägt,
- zwei elektrische Anschlüsse (32), die den mittleren Körper auf der anderen Seite verlängern, wobei jeder elektrische Anschluss mit einem elektrischen Kontaktelement verbunden ist.

## Claims

1. Electrical junction box (11) for an exterior cladding panel of a building bearing at least one photovoltaic module comprising an electrical pole at one of its longitudinal ends and an electrical pole of inverse polarity at the other end, the junction box comprising:
- a base (15),
- a lateral wall (16) surrounding the base and extending perpendicularly to the latter, the lateral wall comprising, on its external face, a peripheral edge (17) intended to maintain the junction box in place in an opening provided in the external cladding panel,
- an access hatch (18), situated on the lateral wall of the junction box, intended for insertion, into the junction box, of a circuit breaker (28),
- a cable outlet (21), situated in the part of the junction box situated above the peripheral edge, intended to connect the electrical junction box to an electrical pole of the photovoltaic module borne by the panel,
- an internal cavity (22) delimited by the base and the wall, comprising:
∘ an electrical terminal (23) of perpendicular axis to the base, intended for the connection of an electrical plug (13) situated on the reverse side of an adjacent exterior cladding panel,
∘ an electrical switch (24) connecting the electrical terminal to the cable outlet and situated opposite the access hatch.

2. Electrical junction box according to claim 1, for which the peripheral edge is situated in the upper third of the lateral wall (16).

3. Electrical junction box according to one of the claims 1 or 2, for which the peripheral edge is continued over the periphery of the lateral wall (16).

4. Electrical junction box according to one of the claims 1 to 3, for which the access hatch (18) is delimited by a zone of lesser thickness than the lateral wall (16) or the base (15).

5. Electrical junction box according to one of the claims 1 to 4, for which the cable outlet (21) is adjacent to the peripheral edge (17).

6. Electrical junction box according to one of the claims 1 to 5, for which the cable outlet (21) has the form of an electrical terminal which is suitable for connection of an electrical plug.

7. Electrical junction box according to one of the claims 1 to 6, for which the electrical switch (24) is a switch with flexible blades for mechanical actuation comprising two contact blades (25) for contact of one to the other by default and which can be removed one from the other by a mechanical action.

8. Exterior cladding panel of a building comprising:
- an upper transverse edge (4) comprising an upper covering zone (41) intended to be covered by an adjacent panel (1),
- a lower transverse edge (5) comprising a lower covering zone (51) intended to cover an adjacent panel (1),
- a central part (6), connecting the transverse edges, covered by at least one photovoltaic module (7) comprising an electrical pole at one of its longitudinal ends and an electrical pole of inverse polarity at the other end,
- a break-through (10) situated in the lower covering zone (51) and traversed by an electrical cable (14) connecting one of the two electrical poles of the photovoltaic module to an electrical plug (13) situated on the reverse side of the panel in the lower covering zone (51),
- an opening (8) situated in the upper covering zone (41), in which an electrical junction box (11) is inserted, according to claim 1, connected to the other electrical pole of the photovoltaic module by means of an electrical cable (12).

9. Exterior cladding panel of a building according to claim 8, comprising furthermore a reinforcement (9) surrounding the opening (8).

10. Electrical connection assembly comprising an electrical junction box according to any of the claims 1 to 7, and a circuit breaker (28) comprising:
- a central body (29) making it possible to grip the circuit breaker,
- a knife (30), extending the central body on one side and bearing on its faces, respectively lower and upper, two electrical contactors (31),
- two electrical sockets (32) extending the central body on the other side, each electrical socket being connected to an electrical con tactor.
